## Europäisches Patentamt

(19) **European Patent Office**

**Office européen des brevets**

(11) Veröffentlichungsnummer: **0 204 712**
**B1**

(12) **EUROPÄISCHE PATENTSCHRIFT**

(45) Veröffentlichungstag der Patentschrift:
**01.03.89**

(21) Anmeldenummer: **85904961.1**

(22) Anmeldetag: **05.10.85**

(86) Internationale Anmeldenummer:
**PCT/DE 85/00366**

(87) Internationale Veröffentlichungsnummer:
**WO 86/03258 (05.06.86** Gazette 86/12)

(51) Int. Cl.⁴: **F 02 D 41/24,** G 01 D 3/02 //
H01C10/04, H01C10/16

(54) ADAPTIONSVERFAHREN FÜR EIN POSITIONSERFASSUNGSORGAN, INSBESONDERE IN EINEM KRAFTFAHRZEUG.

(30) Priorität: **19.11.84 DE 3442212**

(43) Veröffentlichungstag der Anmeldung:
**17.12.86 Patentblatt 86/51**

(45) Bekanntmachung des Hinweises auf die Patenterteilung:
**01.03.89 Patentblatt 89/9**

(84) Benannte Vertragsstaaten:
**DE FR GB IT**

(56) Entgegenhaltungen:
**EP-A- 0 078 592**
**EP-A- 0 096 948**
**EP-A- 0 118 247**
**WO-A-83/03913**
**US-A- 4 359 894**
**US-A- 4 435 691**

(73) Patentinhaber: **ROBERT BOSCH GMBH, Postfach 50,
D-7000 Stuttgart 1 (DE)**

(72) Erfinder: **PLAPP, Günther, Gymnasiumstrasse 26,
D-7024 Filderstadt (DE)**

ACTORUM AG

## Beschreibung

### Stand der Technik

Die Erfindung geht aus von einem Adaptionsverfahren nach der Gattung des Hauptanspruchs (EP-A-118 247). Aus dem deutschen Gebrauchsmuster 71 20 684 sowie aus der DE-OS 34 33 585 sind zur Verwendung als Drosselklappen-Stellungsgeber Potentiometer bekannt, die ebenfalls sich überlappende Potentiometerbahnen mit unterschiedlicher Auflösung aufweisen. Mit dieser Anordnung ist es möglich, im Bereich kleiner Öffnungswinkel mit einer sehr hohen Auflösung und im Bereich größerer Öffnungswinkel mit einer kleineren Auflösung zu arbeiten.

Aus der DE-OS 24 42 373 ist eine elektrisch gesteuerte, intermittierend arbeitende Kraftstoffeinspritzanlage mit einer Einspritzsignalerzeugung bekannt, die von der Drehzahl und der Drosselklappenstellung ausgeht. Die Drosselklappenstellung wird dort mittels eines Potentiometers erfaßt. Im Hinblick auf eine optimale Kraftstoffzumessung ist es erforderlich, im Bereich relativ kleiner Drosselklappenöffnungswinkel, d.h. im unteren Lastbereich, die Drosselklappenposition sehr exakt zu erfassen. Dies erfordert eine im Vergleich zu höheren Lastbereichen erhöhte Auslösung im unteren Lastbereich.

Bei Verwendung eines Potentiometers mit sich überlappenden Bahnbereichen, wobei der kleinen Öffnungswinkeln entsprechende Bahnbereich eine höhere Auflösung aufweist, kann zwar prinzipiell eine ausreichende Genauigkeit zur Erfassung beispielsweise der Drosselklappenstellung erreicht werden, jedoch hat es sich als sehr problematisch erwiesen, die sich überlappenden Bahnbereiche so exakt einander zuzuordnen, daß ein erlaubter Fehler von 0,2° nicht überschritten wird. Aus Fertigungsgründen, insbesondere in der Massenherstellung, kann jedoch mit vertretbarem Aufwand keine größere Genauigkeit als +/− 1° erreicht werden.

Fehlerkorrekturen bei Potentiometeranzeigen sind ganz allgemein bekannt, wobei jedoch verschiedene Wege gegangen werden. So ist beispielsweise in der EP-A-0118247 ein Potentiometer mit einer wirksamen Leiterbahn beschrieben, bei dem die Anzeigegenauigkeit verbessert werden soll.

Hierbei handelt es sich um die Korrektur der Potentiometer-Linearität, d.h. die Potentiometeraussagen werden korrigiert, um die Anzeigengenauigkeit zu verbessern. Um diese Aufgabe zu lösen, muß das an sich handelsübliche Potentiometer durch zusätzliche Maßnahmen spezialisiert werden; es ist nämlich eine zusätzliche Leiterbahn 8 erforderlich, in der Isolierbereiche vorgesehen werden. Diese Inseln müssen exakt positioniert werden und einen scharfen Übergang von leitenden zu den nichtleitenden Bereichen aufweisen, da sonst eine fehlerfreie Korrektur der Potentiometerstellung nicht gewährleistet ist.

### Aufgabe und Vorteile der Erfindung

Es ist daher die Aufgabe der Erfindung, ein Verfahren aufzuzeigen, durch das trotz zu hoher Fertigungstoleranzen eine sehr exakte Zuordnung der Meßsignale der verschiedenen Bahnbereiche zueinander erreicht werden kann.

Diese Aufgabe wird durch die kennzeichnenden Merkmale des Hauptanspruchs in vorteilhafter Weise gelöst, wobei auch spätere Verschiebungen, z.B. infolge Alterung, noch ausgeglichen werden können und zu keinen Fehlern im Meßergebnis führen. Es wird eine im Vergleich zu den Fertigungstoleranzen sehr hohe Genauigkeit und Auflösung erreicht.

Durch die in den Unteransprüchen angegebenen Merkmale sind vorteilhafte Weiterbildungen und Verbesserungen des im Hauptanspruch angegebenen Adaptionsverfahrens möglich. So wird insbesondere gewährleistet, daß kurzzeitig auftretende Störsignale oder Verschiebungen durch Erschütterungen ohne Einfluß auf den Korrekturwert für die Adaption bleiben, da ein neuer Korrekturwert erst dann gebildet wird, wenn nach einer vorgebbaren Anzahl von Betriebszyklen die Abweichung immer die gleiche Richtung aufweist.

### Zeichnung

Ausführungsbeispiele der Erfindung sind in der Zeichnung 1, 2 und 4 bis 6 dargestellt und werden im folgenden näher beschrieben und erläutert. Es zeigen Figur 1 eine Übersichtsdarstellung einer elektronisch gesteuerten Einspritzanlage, bei der als wichtigste Betriebskenngrößen die Drosselklappenposition und die Drehzahl verarbeitet werden, Figur 2 ein Positionserfassungsorgan mit mehreren Einzelbahnen bzw. Einzelbereichen ausgehend von einem gemeinsamen Anfangspunkt, Figur 3, ein Vergleichsbeispiel eines Positionserfassungsorgans mit über den Gesamtbereich verteilt angeordneten Einzelbereichen, Figur 4, ein Positionserfassungsorgan für eine Drehbewegung mit zwei einzelnen, versetzten Bahnbereichen, Figur 5 eine Darstellung der Zuordnung der Meßwerte zweier sich überlappender Widerstandsbahnen und Figur 6 ein Flußdiagramm zur Erläuterung der Wirkungsweise der Adaption.

### Beschreibung der Ausführungsbeispiele

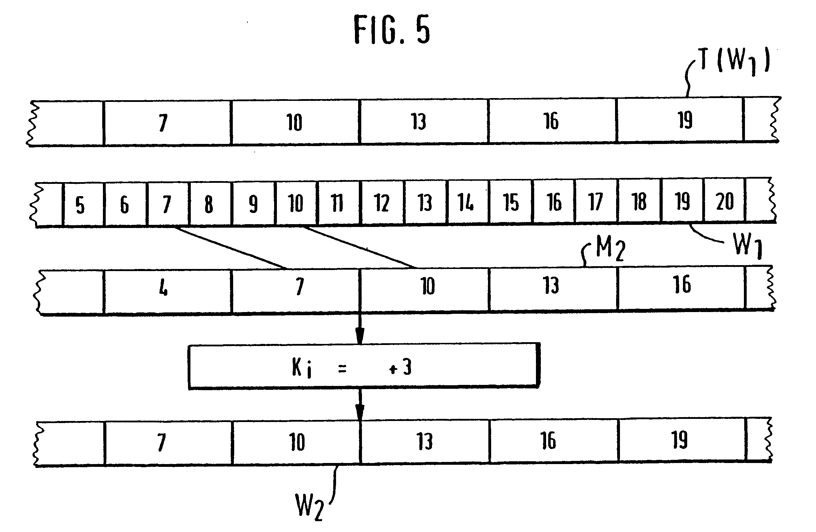

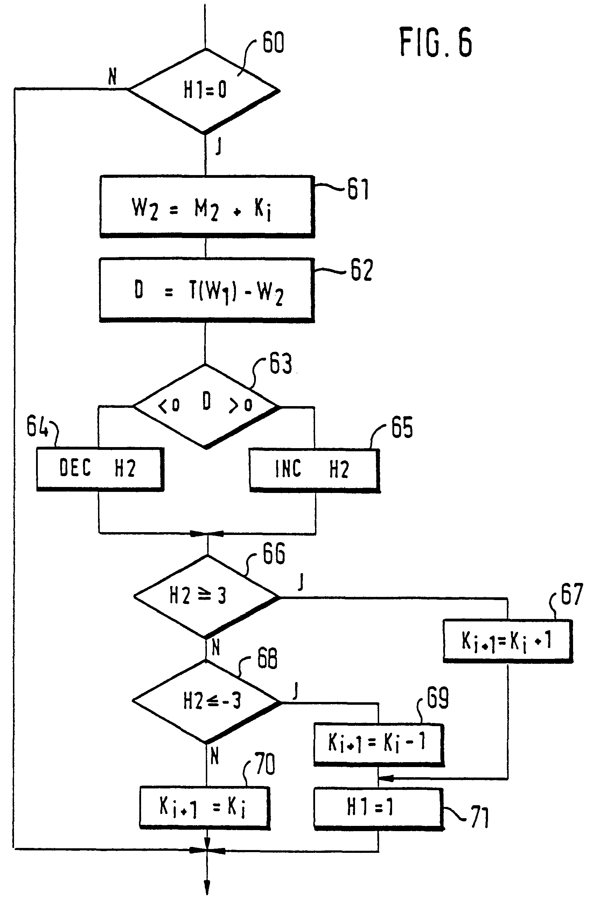

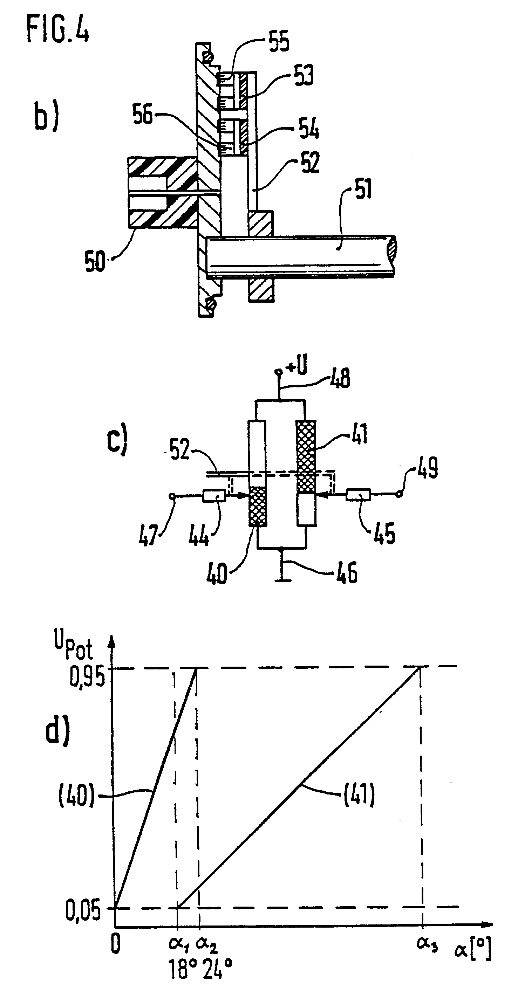

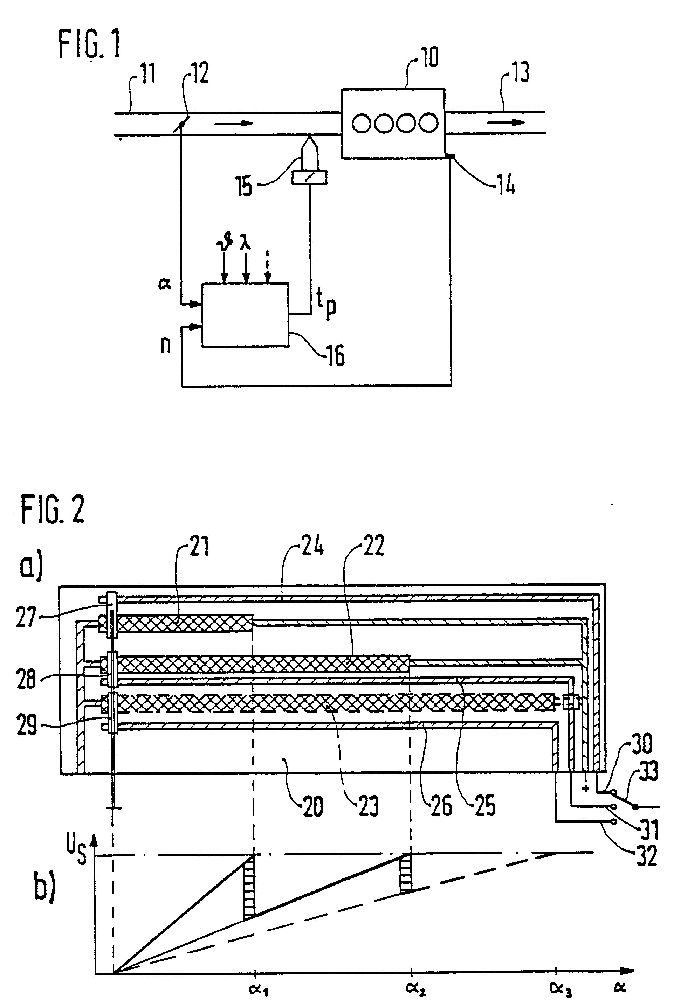

Figur 1 offenbart die Grundstruktur einer elektrisch gesteuerten und vorzugsweise intermittierend arbeitenden Kraftstoffeinspritzanlage ausgehend von Signalen der Drehzahl und des Drosselklappenstellungswinkels. Eine derartige Anordnung ist z.B. aus der bereits eingangs erwähnten DE-OS 24 42 373 bekannt.

Eine Brennkraftmaschine 10 erhält Ansaugluft über ein Ansaugrohr 11 mit einer Drosselklappe 12 und besitzt eine Abgasleitung 13. Ein Drehzahlsensor 14 erfaßt die Augenblicksdrehzahl der Kurbelwelle und bestimmt zusammen mit der Position α der Drosselklappe 12 ein Einspritzsignal $t_p$ für ein dem Ansaugrohr 11 zugeordnetes Einspritzventil 15. In das Steuergerät 16 für die elektronische Einspritzung werden in der Regel neben Drehzahl und Drosselklappenposition noch weitere Betriebskenngrößen, wie z.B. die Temperatur und Lambda eingespeist. Dies ist mit weiteren Eingängen des Steuergeräts 16 angedeutet.

Je nach Lastbereich der Brennkraftmaschine besitzt die Drosselklappe 12 einen unterschiedlichen Öffnungswinkel. Dabei ist die Reaktion der Brennkraftmaschine im Bereich kleiner Öffnungswinkel der Drosselklappe feinfühliger als bei großen Öffnungswinkeln, so daß es erforderlich ist, die Auflösung des Öffnungswinkels im unteren Lastbereich höher zu wählen als im oberen.

Figur 2 zeigt ein Beispiel für ein Positionserfassungsorgan für die Drosselklappe 12 beim Gegenstand von Figur 1 in linearer, weil dadurch übersichtlicherer Darstellung.

Nach Figur 2a befinden sich auf einem gemeinsamen Substrat 20 drei Widerstandsbahnen 21, 22 und 23 mit drei zugeordneten Schleiferbahnen 24, 25 und 26 sowie drei Schleifern 27, 28 und 29, die mit einem gemeinsamen, nicht dargestellten Antrieb gekoppelt sind. Die drei Widerstandsbahnen bilden drei Potentiometer, deren Ausgangssignale über die Leiterbahnen 24 bis 26 an Leitungen 30 bis 32 abnehmbar sind und die einzelnen Signale mittels eines Schalters 33 für die Weiterverarbeitung ausgewählt werden können.

Wesentlich ist nun, daß über den einzelnen Bahnbereichen der Widerstandsbahnen 21 bis 23 jeweils die gesamte angelegte Spannung abfällt, so daß sich über dem gesamten Bahnbereich das aus Figur 2b dargestellte Signal ergibt. Da die einzelnen Widerstandsbahnen 21 bis 23 mit linearem Widerstandsverhalten ausgebildet sind, ergeben sich nach Figur 2b Geraden mit unterschiedlicher Steigung ausgehend von einem Punkt, der dem linken gemeinsamen Anschlag entspricht.

Zwar sind in Figur 2a drei Widerstandsbahnen eingezeichnet, doch läßt sich die Erfindung verallgemeinern durch eine Mehrzahl von einzelnen Bahnen, worunter im einfachsten Fall zwei zu verstehen sind.

Erreicht eine Widerstandsbahn ihren rechten Endpunkt bzw. dessen Nähe, dann wird dies mittels elektrischer Mittel erfaßt und der Schalter 33 entsprechend weitergeschaltet. Dadurch ergibt sich letztlich der in Figur 2b mit starker Linie gezeichnete Signalverlauf, was unterschiedliche Auflösungen in einzelnen Bahnbereichen widerspiegelt.

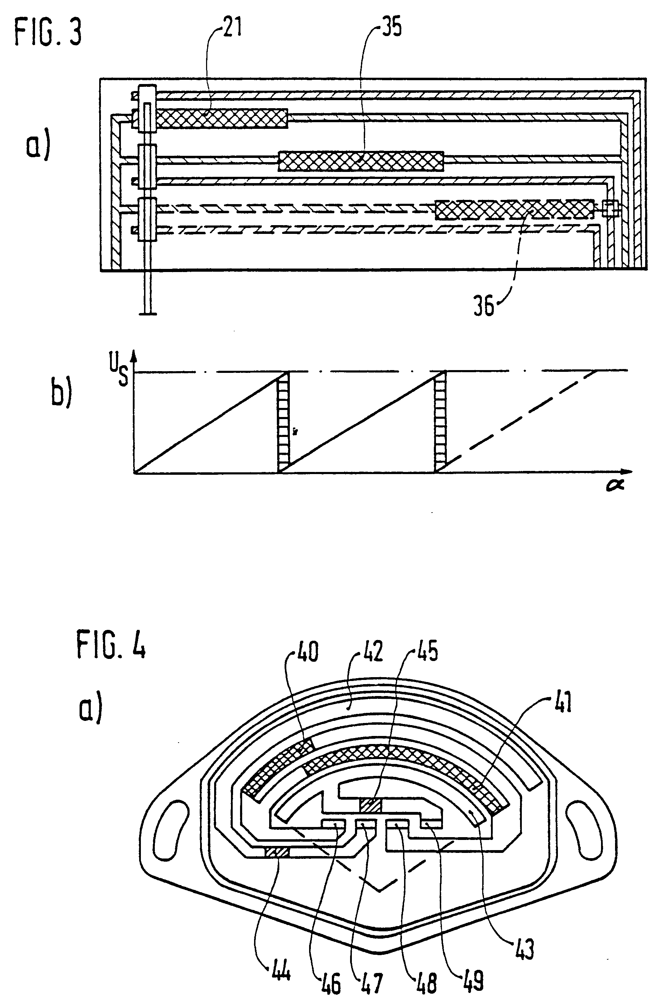

Figur 3 zeigt ein Vergleichsbeispiel, bei dem die einzelnen Widerstandsbahnen nicht bei der gleichen Antriebsposition beginnen, sondern versetzt zueinander angeordnet sind. So beginnt beim Beispiel von Figur 3 die zweite Widerstandsbahn 35 am Ende bzw. in einem bestimmten Überlappungsbereich mit der Widerstandsbahn 21 und eine gegebenenfalls vorhandene weitere Widerstandsbahn 36 beginnt dann eben dort, wo die vorangegangene Widerstandsbahn 35 endet. Dies bedeutet nach der Darstellung von Figur 3b ein sägezahnförmiges Signalverhalten der Gesamtanordnung mit in allen Bereichen sehr hoher Auflösung. Abwandlungen bezüglich der Gegenstände von Figur 2 und 3 sind natürlich dahingehend möglich, daß den einzelnen Widerstandsbahnen bestimmte Funktionen zugeordnet werden. Wesentlich ist ein unterschiedlicher Wirkungsbereich für die einzelnen Schleifer, die die jeweilige Widerstandsbahn 21 bis 23 mit den Leiterbahnen 24 und 26 verbinden, wobei diese Schleifer auch die Verlängerung der Widerstandsbahn 21 und 22 bzw. 35 ohne Signalbeeinflussung überstreichen können.

Figur 4 zeigt ein konkretes Ausführungsbeispiel eines sogenannten Drosselklappenpotentiometers entsprechend dem Prinzip von Figur 3, d.h., daß die einzelnen Widerstandsbahnen zueinander versetzt angeordnet sind.

Beim Drosselklappenpotentiometer nach Figur 4a gibt es zwei Widerstandsbahnen 40 und 41, die versetzt zueinander innerhalb eines bestimmten Auslenkungswinkels eines Antriebs 51 angeordnet sind. Die restlichen Bereiche der Widerstandsbahnen, d.h. ihre Ergänzung zum vollen Auslenkungswinkel sind dabei untersilbert. Ein auf ihnen abgenommenes Signal ist daher positionsunabhängig. Den beiden Widerstandsbahnen 40 und 41 zugeordnete Schleiferbahnen sind mit 42 und 43 gekennzeichnet. Sie sind über je einen Widerstand 44 und 45 mit den insgesamt vier Anschlußpunkten 49 bis 49 verbunden und aufgrund der verkapselten Ausführung des Drosselklappenpotentiometers nach außen zu einem vierpoligen Stecker 50 geführt. Dieser vierpolige Stecker 50 ist aus der in Figur 4b gezeichneten Schnittdarstellung ersichtlich. Gezeichnet sind dort auch eine Drosselklappenwelle 51, ein mit der Drosselklappenwelle fest verbundener Regelhebel 52, an dem wiederum über jeweils eine Isolierplatte 53 und 54 die einzelnen Schleifer 55 und 56 verbunden sind, die die Widerstandsbahn 40 mit der Schleiferbahn 42 und die Widerstandsbahn 41 mit der Schleiferbahn 43 verbinden.

Figur 4c zeigt das entsprechende elektrische Ersatzschaltbild der Anordnung von Figur 4a mit den jeweils gleichen Bezugsziffern. Es besteht im wesentlichen aus zwei parallel geschalteten Potentiometerbahnen mit versetzt angeordneten Widerstandsbereichen und einem gemeinsamen Antrieb 52.

Das elektrische Signalverhalten des Gegenstandes von Figur 4a zeigt Figur 4d. Danach wirkt die erste Widerstandsbahn 40 im Winkelbereich $0 \leqslant \alpha \leqslant \alpha_2$ und die zweite Widerstandsbahn 41 im Bereich $\alpha_1 \leqslant \alpha \leqslant \alpha_3$. Da die beiden Widerstandsbahnen 40 und 41 eine unterschiedliche Länge aufweisen, ergeben sich auch unterschiedliche Steigungen und damit unterschiedliche Spannungsgradienten über ein Winkelinkrement je nach Winkelbereich. Insofern liegt hier beim Ausführungsbeispiel von Figur 4 eine Mischform der Beispiele nach Figur 2 und 3 vor, weil beim Gegenstand von Figur 4 von unterschiedlichen Anfangswerten ausgegangen wird, gleichzeitig jedoch unterschiedliche Steigungen realisiert werden.

In Figur 5 ist die Zuordnung der Meßwerte zweier sich überlappender Widerstandsbahnen, die in Figur 4d als Potentiale dargestellt sind, bei digitalen Meßwerten erläutert. Bei als Mikrorechner ausgebildeten Steuergeräten 16 werden gewöhnlich die als analoge Spannungen zugeführten Meßwerte über Analog-Digital-Wandler im Eingangskreis (nicht näher dargestellt) in digitale Werte umgewandelt. W1 bezeichnet dabei die Meßwerte einer hochauflösenden ersten Widerstandsbahn, beispielsweise der Widerstandsbahn 40. M2 bezeichnet die Meßwerte einer zweiten, weniger hochauflösenden Widerstandsbahn, beispielsweise der Widerstandsbahn 41, die sich mit der ersten Widerstandsbahn in einem Übergangsbereich überlappt. Gemäß Figur 4d ist dies der Bereich zwischen $\alpha 1$ und $\alpha 2$. Die erste Widerstandsbahn weist eine dreimal höhere Auflösung im Vergleich zur zweiten Widerstandsbahn auf. In einem Speicher des Mikrorechners im Steuergerät 16 ist eine Tabelle T (W1) abgelegt, die eine Normzuordnung der Werte der beiden Widerstandsbahnen beinhaltet. In Figur 5 ist ersichtlich, daß die Meßwerte M2 von dieser Normzuordnung um den Wert 3 abweichen, d.h., die beiden Widerstandsbahnen sind um einen den Wert 3 entsprechenden Winkel fehlerhaft gegeneinander versetzt, beispielsweise infolge von Fertigungstoleranzen oder Alterung. Im Rechner wird nun ein diesem Wert 3 entsprechender Korrekturwert $K_i$ gebildet, der zu den Meßwerten M2 hinzuaddiert wird. Es ergeben sich dadurch korrigierte Werte W2, die den Tabellenwerten T (W1) entsprechen und die zur Verarbeitung an den Rechner weitergegeben werden, z.B. zur Berechnung der Einspritzzeit.

In dem in Figur 6 dargestellten Flußdiagramm ist die Bildung dieser Korrekturwerte $K_i$ näher erläutert. Bei diesem Adaptionsverfahren wird zunächst der Zustand einer Speicherzelle H1 abgefragt (Schritt 60). Diese Speicherzelle H1 wird beim Einschalten der Versorgungsspannung zur Initialisierung auf den Wert Null gesetzt und erfüllt eine Flag-Funktion. Da zunächst ein Wert Null gegeben ist, wird im Schritt 61 zur Bildung eines korrigierten Werts W2 für die zweite Widerstandsbahn der Meßwert M2 dieser Widerstandsbahn mit dem Korrekturwert Ki addiert, sofern natürlich überhaupt ein Korrekturwert vorliegt. Dies wurde bereits in Figur 5 erläutert. Danach wird im Schritt 62 abgefragt, ob der korrigierte Wert W2 dem Tabellenwert T (W1) entspricht. Wenn dies nicht der Fall ist wird durch Differenzbildung ein Differenzwert D gebildet. Diese Vorgänge beziehen sich natürlich auf den sich überlappenden Bereich der beiden Widerstandsbahnen, also gemäß Figur 4d auf den Bereich zwischen $\alpha1$ und $\alpha2$.

Im Schritt 63 wird nun überprüft, ob ein eventuell vorhandener Differenzwert D größer oder kleiner als Null ist. Ist der Differenzwert kleiner als Null, so wird ein Register H2 dekrementiert (Schritt 64), ist er größer als Null, so wird das Register H2 inkrementiert (Schritt 65). Der Sinn dieser Maßnahme ist die Vermeidung einer Veränderung des Korrekturwerts schon dann, wenn eine einzige Abweichung, bzw. ein einziger Differenzwert auftritt. Dies könnte durch ein Störsignal oder Erschütterungen bedingt sein. Erst wenn eine vorgebbare Anzahl von Abweichungen in die gleiche Richtung festgestellt wird, soll von einer bleibenden Abweichung ausgegangen werden, die eine Korrektur erfordert.

Im Ausführungsbeispiel ist die Zahl der erforderlichen Abweichungen auf 3 festgelegt. Im Schritt 66 wird daher zunächst überprüft, ob der Registerinhalt $H2 \geq 3$ ist. Wenn dies der Fall ist, so wird der Korrekturwert $K_i$ um ein Inkrement erhöht, und es gibt sich ein neuer Korrekturwert $K_{i+1}$ (Schritt 67). Wenn dagegen der Registerinhalt $H2 \leq -3$ ist (Schritt 68), so wird entsprechend der Korrekturwert um den Wert 1 dekrementiert (Schritt 69). Ist jedoch keine der beiden Bedingungen 66, 68 erfüllt, so bleibt der bisherige Korrekturwert erhalten (Schritt 70).

Wurde der Korrekturwert durch den Schritt 67 oder 69 verändert, so wird danach die Speicherzelle H1 auf den Wert 1 gesetzt (Schritt 71). Der Grund hierfür ist der, daß bei einem erneuten Programmdurchlauf die Bedingung H1 = 0 im Schritt 60 nicht mehr erfüllt ist und somit keine weitere Veränderung des Korrekturwerts erfolgen kann. Erst im nächsten Betriebszyklus, also wenn z.B. die Versorgungsspannung abgeschaltet war und hinterher wieder eingeschaltet wurde, wird der Adaptionszyklus erneut durchlaufen.

Selbstverständlich kann in einer einfacheren Version der Korrekturwert $K_i$ auch bei jedem Auftreten eines Differenzwerts D entsprechend korrigiert werden. Ebenso kann die Adaption auch prinzipiell bei jedem Programmdurchlauf erfolgen.

## Patentansprüche

1. Verfahren zum Adaptieren der Drosselklappenposition eines Kraftfahrzeuges mittels eines Mikroprozessors oder dergleichen, bei dem zum Erfassen des Drosselklappenwinkels ein Potentiometer mit zwei Leiterbahnen, die unterschiedliche Winkelbereiche der Drosselklappe überstreichen und sich in einem bestimmten Winkelbereich überlappen, vorgesehen ist, wobei der Winkelbereich der ersten Leiterbahn wesentlich geringer als der Winkelbereich der zweiten Leiterbahn ist, wobei im Überlappungsbereich für einen bestimmten Kennlinien-Winkelwert der ersten Leiterbahn der augenblickliche Ist-Wert des diesem Kennlinienwert zugeordneten Kennlinienwert der zweiten Leiterbahn ermittelt und mit einem Sollwert, abgeleitet aus dem Kennlinien-Winkelwert der ersten Leiterbahn verglichen wird, wobei bei Abweichen nach oben bzw. nach unten ein positiver bzw. negativer Korrekturwert ($K_i$) gebildet wird, wobei diese Korrektur außerhalb des Überlappungsbereichs fortgeschrieben wird, dadurch gekennzeichnet, daß die Kennlinien der ersten und der zweiten Leiterbahn in die gleiche Anzahl von Stufen digitalisiert werden so daß die Auflösung der ersten Leiterbahn wesentlich größer ist als die Auflösung der zweiten Leiterbahn.

2. Verfahren nach Anspruch 1, dadurch gekennzeichnet, daß die digitalisierten Spannungswerte der ersten Kennlinie elektrisch in einer Tabelle T (W1) abgespeichert werden und der digitalisierte Ist-Meßwert M2 des geprüften Winkels $\alpha$ mit dem betreffenden Tabellenwert T (W1) desselben Winkels $\alpha$ verglichen und eine eventuelle Abweichung als digitaler Korrekturwert ($K_i$) erfaßt und zu dem gemessenen Ist-Meßwert (M2) addiert bzw. von ihm subtrahiert wird.

3. Verfahren nach Anspruch 1 und 2, dadurch gekennzeichnet, daß der Korrekturwert ($K_i$) gespeichert und eine weitere Korrekturwertbildung bis zu einem neuen Betriebszyklus (Neustart des Motors) gesperrt wird.

4. Verfahren nach Anspruch 2, dadurch gekennzeichnet, daß bei einem neuen Betriebszyklus ein neuer Korrekturwert $K_{i+1}$ gebildet wird, wenn $D = T (W1) - W2 \gtreqless 0$ ist, wobei $W2 = M2 + K_i$ ist.

5. Verfahren nach Anspruch 4, dadurch gekennzeichnet, daß die Korrekturwertbildung erst bei Auftreten von mehreren Fehlabweichungen durchgeführt wird.

## Claims

1. Method for adjusting the throttle valve position of a motor vehicle by means of a microprocessor or similar, in which, for recording the throttle valve angle, a potentiometer with two conductor tracks, which cover different angular ranges of the throttle valve and which mutually overlap in a certain angular section, is provided, the angular range of the first conductor track being substantially smaller than the angular range of the second conductor track, in which case the overlapping section for a certain characteristic curve angular value of the first conductor track, the current actual value of the characteristic curve value, associated with said characteristic curve value, of the second conductor track is determined and compared with a nominal value, derived from the characteristic curve angular value of the first conductor track, a positive or negative correction value ($K_i$) being formed where there is deviation upwards or downwards respectively, this correction being continued outside the overlapping section, characterized in that the characteristic curves of the first and of the second conductor track are digitized in the same number of stages, so that the resolution of the first conductor track is substantially greater than the resolution of the second conductor track.

2. Method according to Claim 1, characterized in that the digitized voltage values of the first characteristic curve are stored electrically in a table T (W1) and the digitized actual measured value M2 of the tested angle $\alpha$ is compared with the relevant table value T (W1) of the same angle $\alpha$ and any deviation is recorded as a digital correction value ($K_i$) and is added to or subtracted from the measured actual measured value (M2) respectively.

3. Method according to Claims 1 and 2, characterized in that the correction value ($K_i$) is stored and formation of a further correction value is blocked until a new operating cycle (restart of the engine).

4. Method according to Claim 2, characterized in that for a new operating cycle, a new correction value $K_{i+1}$ is formed if $D = T (W1) - W2 \gtrless 0$, where $W2 = M2 + K_i$.

5. Method according to Claim 4, characterized in that the correction value is only formed after several error deviations have occured.

## Revendications

1. Procédé pour adapter la position du clapet d'étranglement d'un véhicule automobile, au moyen d'un microprocesseur ou d'un organe analogue, procédé dans lequel, pour détecter l'angle du clapet d'étranglement, il est prévu un potentiomètre avec deux pistes conductrices qui recouvrent des zones angulaires différentes du clapet d'étranglement, et qui se chevauchent dans une zone angulaire déterminée, la zone angulaire de la première piste conductrice étant notablement plus réduite que la zone angulaire de la deuxième piste conductrice, tandis que dans la zone de chevauchement, pour une valeur angulaire de courbes caractéristiques déterminée de la première piste conductrice, on détermine la valeur réelle momentanée de la valeur de courbes caractéristiques, associée à cette valeur de courbes caractéristiques de la première piste conductrice, de la seconde piste conductrice et on la compare avec une valeur de consigne, dérivée de la valeur angulaire de courbes caractéristiques de la première piste conductrice, auquel cas, lors d'un écart vers le haut ou bien vers le bas, on forme une valeur de correction positive ou bien négative ($K_i$), cette correction étant actualisée en dehors de la zone de chevauchement, procédé caractérisé en ce que les courbes caractéristiques de la première et de la seconde pistes conductrices sont mises sous forme numérique selon le même nombre de paliers, de sorte que la résolution de la première piste conductrice est notablement supérieure à la résolution de la seconde piste conductrice.

2. Procédé selon la revendication 1, caractérisé en ce que les valeurs de tension mises sous forme numérique de la première courbe caractéristique, sont mémorisées électriquement dans un tableau T (W1), tandis que la valeur de mesure réelle mise sous forme numérique M2 de l'angle contrôlé $\alpha$ est comparée avec la valeur correspondante du tableau T (W1) de cet angle $\alpha$ et un écart éventuel est admis comme valeur de correction numérique ($K_i$) et il est ajouté à la valeur de mesure réelle mesurée (M2) ou bien soustrait de cette valeur.

3. Procédé selon la revendication 1 ou 2, caractérisé en ce que la valeur de correction ($K_i$) est mémorisée et une autre formation de valeur de correction est bloquée jusqu'à un nouveau cycle de fonctionnement (nouveau démarrage du moteur).

4. Procédé selon la revendication 2, caractérisé en ce que pour un nouveau cycle de fonctionnement, on forme une nouvelle valeur de correction $K_{i+1}$, lorsque $D = T (W1) - W2 \gtrless 0$, tandis que $W2 = M2 + K_i$.

5. Procédé selon la revendication 4, caractérisé en ce que l'on ne procède à la formation de la valeur de correction qu'au cas où plusieurs écarts anormaux se sont produits.

# FIG. 5

EP 0 204 712 B1

FIG. 6

**FIG.4**

b)

c)

d)

FIG. 1

FIG. 2

a)

b)

FIG. 3

21    35

a)

36

b)

$U_S$

$\alpha$

FIG. 4

a)

40    42    45

41

43

44    46    47    48    49